# EUROPEAN PATENT APPLICATION

(11) **EP 4 394 727 A1**
(43) Date of publication of application: **03.07.2024**
(21) Application number: 22861631.4
(22) Date of filing: 18.08.2022
(51) Int. Cl.: G06V 20/52, G06V 40/20, G06V 10/25, G01S 17/89, G06V 10/82, G06N 20/00, G06T 7/20, G08B 21/02, G08B 21/18

(54) **METHOD AND SENSING DEVICE FOR MONITORING REGION OF INTEREST IN WORKSPACE**

(30) Priority: 26.08.2021 KR 20210113406
(71) Applicant: Seoul Robotics Co., Ltd., Seoul 06649 (KR)
(72) Inventor: PARK, Jaeil, Seoul 08715 (KR); KIM, Dong Hae, Seoul 07012 (KR); RA, Chan Yeop, Incheon 22021 (KR)
(74) Representative: J A Kemp LLP
(86) International application number: PCT/KR2022/012340
(87) International publication number: WO 2023/027421

(57) **Abstract**

Provided is a sensing device including a sensor unit configured to obtain point cloud data with respect to a workspace by using a 3D sensor that detects a three-dimensional space, a memory, and a processor configured to, by executing one or more instructions stored in the memory, set a region of interest corresponding to a machine tool placed in the workspace, track a posture of an operator operating the machine tool, based on point cloud data with respect to the region of interest, and detect an emergency situation in the workspace based on the tracked posture of the operator.

## Description

### Technical Field

Provided are a method and a sensing device for monitoring a region of interest in a workspace.

### Background Art

Safety accidents among operators occur every year in workspaces where machine tools are used. It is necessary to prevent safety accidents in advance or respond quickly when a safety accident occurs. To this end, a technology for quickly and accurately sensing a workspace is required.

With the development of sensing technologies such as Light Detection and Ranging (LiDAR) technology, advanced control functions incorporating sensing technology functions have recently been utilized in various industrial technology fields. LiDAR is a technology wherein light is emitted to an object in a three-dimensional space and then reflected light is received, thereby obtaining information about the three-dimensional space.

### Disclosure

### Technical Problem

The present disclosure relates to a method and a sensing device for monitoring a region of interest in a workspace to detect an emergency situation in the workspace by tracking a posture of an operator operating a machine tool.

### Technical Solution

A method for monitoring a region of interest in a workspace, according to a first aspect, includes instructions for obtaining point cloud data with respect to the workspace by using a 3D sensor that detects a three-dimensional space, instructions for setting a region of interest corresponding to a machine tool placed in the workspace, instructions for tracking a posture of an operator operating the machine tool based on the point cloud data with respect to the region of interest, and instructions for detecting an emergency situation in the workspace, based on the tracked posture of the operator.

A computer-readable storage medium according to a second aspect includes instructions for obtaining point cloud data with respect to a workspace by using a 3D sensor that detects a three-dimensional space, instructions for setting a region of interest corresponding to a machine tool placed in the workspace, instructions for tracking a posture of an operator operating the machine tool, based on point cloud data with respect to the region of interest, and instructions for detecting an emergency situation in the workspace, based on the tracked posture of the operator.

A sensing device for monitoring a region of interest in a workspace, according to a third aspect, includes a sensor unit configured to obtain point cloud data with respect to the workspace by using a 3D sensor that detects a three-dimensional space, a memory storing one or more instructions, and a processor configured to, by executing the one or more instructions, set a region of interest corresponding to a machine tool placed in the workspace, track a posture of an operator operating the machine tool, based on point cloud data with respect to the region of interest, and detect an emergency situation in the workspace based on the tracked posture of the operator.

### Description of Drawings

FIG. 1 is a diagram for describing an emergency situation detection system which includes a sensing device and a server and is installed in a workspace.
FIG. 2 is a diagram for describing a configuration and an operation of a sensing device according to an embodiment.
FIG. 3 is a diagram for describing point cloud data and a region of interest with respect to a workspace.
FIG. 4 is a diagram illustrating an example of a process of determining whether point cloud data corresponding to an operator exists in an emergency region and sub-observation regions in order to track a posture of the operator.
FIGS. 5A, 5B, 5C, and 5D are diagrams for describing examples of determining a posture of an operator based on a combination of regions where point cloud data corresponding to an operator exists in an emergency region and sub-observation region.
FIG. 6 is a diagram illustrating an example of a process of extracting skeleton information from point cloud data corresponding to an operator in order to track a posture of the operator.
FIG. 7 is a diagram for describing a configuration and an operation of a server according to an embodiment.
FIG. 8 is a flowchart of a method of monitoring a region of interest in a workspace, according to an embodiment.
FIG. 9 is a detailed flowchart of an example of a process of detecting an emergency situation in a workspace.
FIG. 10 is a detailed flowchart of an example of a process of predicting an emergency situation in a workspace.

### Best Mode

### Mode for Invention

Hereinafter, various embodiments will be described in detail with reference to the drawings. For clarity of description of the features of the embodiments, details that are well-known to one of ordinary skill in the art will be omitted.

In the present the specification, it will also be understood that when an element is referred to as being "connected to" another element, it can be directly connected to the other element, or it can be electrically connected to the other element and intervening elements may be present. Also, when an element "includes" another element, unless there is a particular description contrary thereto, the element can further include other elements, not excluding the other elements.

In the present description, terms including ordinal numbers such as 'first', 'second', etc. are used to describe various elements but the elements should not be defined by these terms. The terms are used only for distinguishing one element from another element.

These embodiments relate to a method and sensing device for monitoring a workspace, and details that are well-known to one of ordinary skill in the art will be omitted.

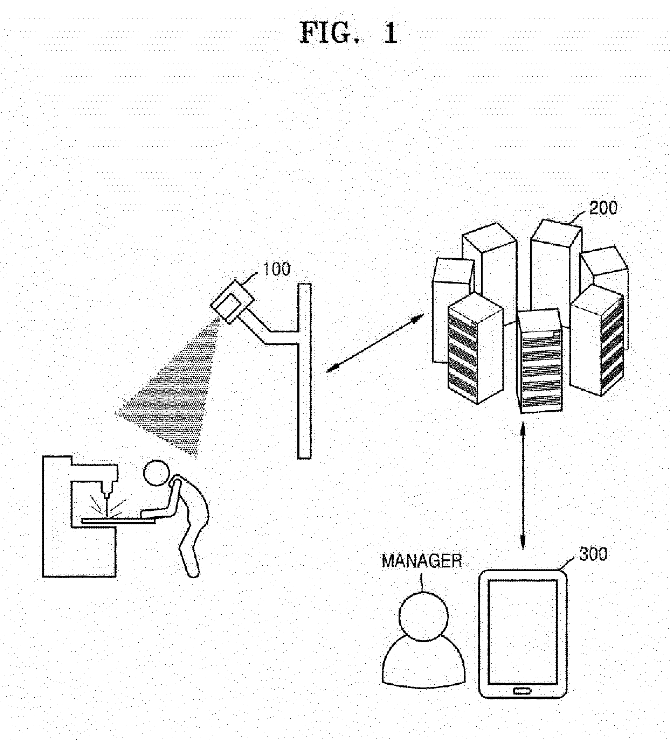

FIG. 1 is a diagram illustrating an emergency situation detection system including a sensing device 100 and a server 200 installed in a workspace.

The sensing device 100 is a device capable of obtaining point cloud data as spatial information of a three-dimensional space, and may include a 3D sensor that senses a three-dimensional space. The sensing device 100 may emit light in a three-dimensional space and obtain point cloud data with respect to the three-dimensional space based on the light received in response.

The sensing device 100 is a 3D sensor that senses a three-dimensional space and may include a Light Detection and Ranging (LiDAR) sensor and may obtain volumetric point cloud data. LiDAR sensors cannot detect the color of objects in the three-dimensional space, but can detect shape, size, and location. Multi-channel LiDAR sensors that can collect information about a three-dimensional space cannot detect the color or texture of an object, but are suitable for fields in which the approximate shape, size, and volume of the object can be utilized.

The sensing device 100 may be installed indoors or outdoors, where a space corresponding to a region of interest can be detected. For example, in order to monitor a region of interest in a workspace where a machine tool is placed, the sensing device 100 may be installed in any desired location and desired angle to check the body of an operating the machine tool and determine whether the body of the operator enters the inside of the machine tool. The sensing device 100 may be connected to the machine tool by applying Internet of Things (IoT) technology.

The server 200 may recognize an emergency situation by using data or information received from the sensing device 100 and transmit information about the emergency situation to a manager terminal 300 or an external server. The server 200 may provide an emergency situation management service by using data or information received from a plurality of sensing devices 100. Through the emergency situation management service, whether operators using machine tools within a workplace are in an emergency situation may be checked, and a service according to established protocols in case of an emergency situation may be provided. The server 200 may provide an emergency situation management service for each business site by installing an emergency situation management virtual machine for each business site.

The server 200 may be the server 200 of a situation management office or a control center. The server 200 may be implemented with technology such as cloud computing.

The manager terminal 300 may be a user terminal used by a user such as a manager or a supervisor. The manager terminal 300 may register preset information for emergency situation management of a workspace where the sensing device 100 is installed, to the server 200, and receive various reports, including notifications or information related to emergency situation management, from the server 200.

In FIG. 1, the emergency situation detection system is implemented in a form that includes the sensing device 100 and the server 200, but the sensing device 100 may be implemented in a form that can also perform the operation of the server 200. In this case, the sensing device 100 may provide notification or information related to emergency situation management to the manager terminal 300.

As illustrated in FIG. 1, the sensing device 100 may be installed at an appropriate height and angle on infrastructure such as a fixed structure, so as to monitor machine tools placed in the workspace and operators operating the machine tools. Hereinafter, a method and the sensing device 100 for monitoring a region of interest in a workspace to prevent an emergency situation from occurring to operators operating a machine tool in the workspace, and to quickly take action if an emergency situation occurs are described.

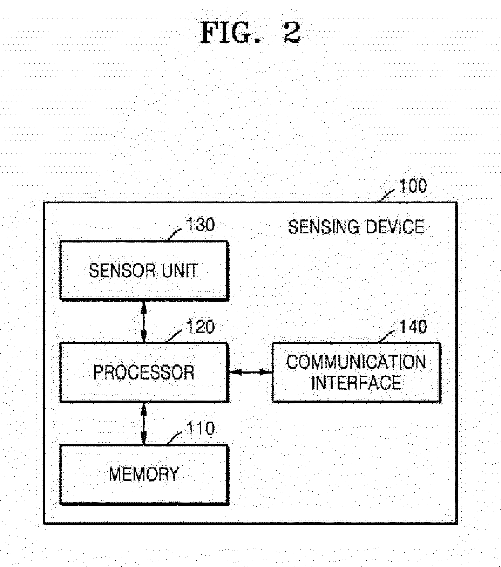

FIG. 2 is a diagram for describing a configuration and an operation of the sensing device 100 according to an embodiment.

Referring to FIG. 2, the sensing device 100 according to an embodiment may include a memory 110, a processor 120, a sensor unit 130, and a communication interface 140. It will be obvious to those skilled in the art pertaining to the present embodiment that other general-purpose components may be included in addition to the components illustrated in FIG. 2.

The memory 110 may store software and/or programs. The memory 110 may store instructions executable by the processor 120.

The processor 120 may access and use data stored in the memory 110 or store new data in the memory 110. The processor 120 may execute instructions stored in the memory 110. The processor 120 may execute a computer program installed in the sensing device 100. Additionally, the processor 120 may store a computer program or application received from the outside in the memory 110 and execute the same. The processor 120 may execute at least one processing module and perform a predetermined operation. For example, the processor 120 may execute or control a processing module that executes a program that monitors a region of interest corresponding to a machine tool placed in the workspace. The processor 120 may control other components included in the sensing device 100 to perform operations corresponding to execution results of instructions or computer programs.

The sensor unit 130 may include at least one sensor for detecting a three-dimensional space. The sensor unit 130 may include a light-emitting unit that emits light in a three-dimensional space and a light receiving unit that receives the light, and may further include a dedicated processor that obtains point cloud data with respect to the three-dimensional space based on the intensity of the light received by the light receiving unit. The sensor unit 130 may obtain point cloud data with respect to the workspace in a detection region in order to track an object located in the workspace.

The sensor unit 130 may be a Light Detection and Ranging (LiDAR) sensor and may include at least one three-dimensional LiDAR sensor to obtain data about a workspace in a predetermined range. Depending on the environment, the sensor unit 130 may further include various types of sensors such as radar sensors, infrared image sensors, ultrasonic sensors, and image sensors. For example, the sensor unit 130 may monitor a region of interest of the workspace by using a LiDAR sensor, and when an emergency situation occurs in the region of interest, the sensor unit 130 may execute an image sensor such as a camera, to obtain additional information about the workspace where the emergency situation has occurred.

The communication interface 140 may perform wired or wireless communication with other devices or networks. To this end, the communication interface 140 may include a communication module that supports at least one of various wired and wireless communication methods. For example, the communication interface 140 may include a communication module that performs short-range communication such as Radio Frequency Identification (RFID), Near Field Communication (NFC), Bluetooth, various types of wireless communication, or wired communication using coaxial cables or optical cables. The communication interface 140 may be connected to a device located outside the sensing device 100 to transmit and receive signals or data. The sensing device 100 may communicate with the server 200 or the manager terminal 300 that provides an emergency situation management service, such as a situation management office, through the communication interface 140, and notify of the detected emergency situation. Additionally, the sensing device 100 may use point cloud data with respect to the workspace to control devices or may be connected to an external server that provides a certain service, through the communication interface 140.

In addition to the components described above, the sensing device 100 may further include a position sensor such as GPS, and may further include components for improving sensing performance depending on the installation environment of the sensing device 100.

The processor 120 according to an example according to the above configuration may obtain point cloud data with respect to the workspace by executing one or more instructions stored in the memory 110, and set a region of interest corresponding to the machine tool placed in the workspace, and may track, based on the point cloud data with respect to the region of interest, objects within the region of interest.

When the sensing device 100 continuously senses the workspace to monitor the workspace, the processor 120 may obtain point cloud data with respect to the workspace by time by using the sensor unit 130. The processor 120 may monitor the workspace, particularly the region of interest corresponding to the machine tool placed in the workspace, based on the point cloud data accumulated by time for the workspace.

The processor 120 may set a region of interest corresponding to a machine tool placed in the workspace by executing one or more instructions stored in the memory 110. The processor 120 may detect objects in the workspace based on the obtained point cloud data with respect to the workspace and generate a spatial information map of the workspace. The processor 120 may set a region of interest corresponding to a machine tool placed in the workspace based on preset information or user input information input to the spatial information map.

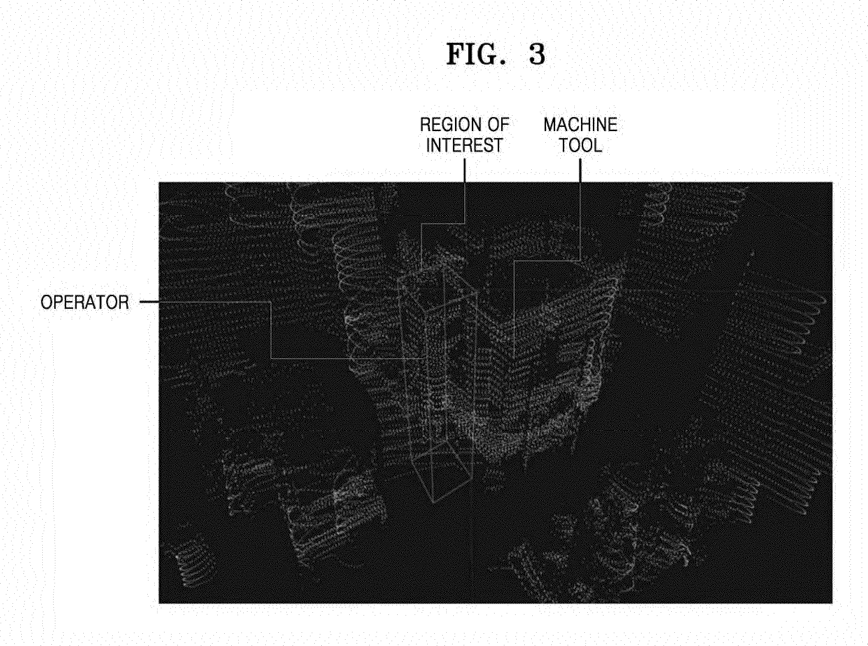

FIG. 3 is a diagram for describing point cloud data and a region of interest with respect to a workspace.

Referring to FIG. 3, a spatial information map of a three-dimensional view generated based on the point cloud data with respect to the workspace obtained by the sensing device 100 may be confirmed. Objects in the workspace may be divided into static objects and dynamic objects. In a spatial information map representing a workspace, dynamic objects such as operators may appear and disappear, move their positions or change their posture within the workspace, while static objects such as machine tools may be detected continuously at the same location within the workspace.

The sensing device 100 needs to more accurately detect and track a machine tool corresponding to the sensing device 100 and an operator operating the machine tool within the workspace. One sensing device 100 may be installed to detect a plurality of machine tools, but for more accurate monitoring, a dedicated sensing device 100 may be installed for each machine tool and a region of interest corresponding to the machine tool installed in the workspace may be set.

The region of interest may be a region corresponding to a three-dimensional space that includes an emergency region of the machine tool and an observation region where the body of the operator is located when operating the machine tool. The location and extent of the machine tool's emergency region may vary within the machine tool depending on the type of machine tool. Since the operating position and range of motion of the operator vary depending on the type of machine tool, the location and range of the observation region may also vary.

The processor 120 of the sensing device 100 may set, in a spatial information map generated based on the point cloud data with respect to the workspace, as regions of interest, an emergency region preset depending on the type of machine tool and an observation region determined based on physical information based on a user profile of an operator. Alternatively, the sensing device 100 may receive user input information about a region of interest from the outside.

Referring to the spatial information map of FIG. 3, the positions of the machine tool and the operator may be confirmed based on point cloud data corresponding to the machine tool and point cloud data corresponding to the operator, and there is a region of interest set, for tracking the posture of the operator standing at the front side of the machine tool.

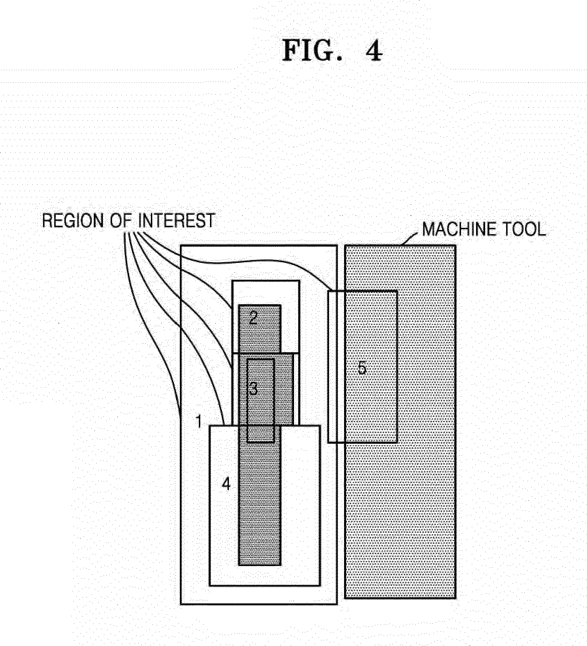

Referring back to FIG. 2, the processor 120 may track the posture of the operator operating the machine tool based on the point cloud data with respect to the region of interest set in the workspace. The processor 120 may track the posture of the operator operating the machine tool based on the point cloud data with respect to the region of interest by accumulating a plurality of frames or for each frame in which the point cloud data with respect to the workspace is obtained. The processor 120 may identify static objects, such as machine tools, and dynamic objects, such as operators, by clustering the point cloud data with respect to the region of interest by object in the plurality of frames. The processor 120 may identify dynamic point cloud data within the region of interest and determine the same to be point cloud data corresponding to the operator. Hereinafter, with reference to FIGS. 4 to 6, algorithms for estimating the posture of the operator will be described.

FIG. 4 is a diagram illustrating an example of a process of determining whether point cloud data corresponding an operator exists in an emergency region and sub-observation regions in order to track a posture of the operator.

An example is described with reference to FIG. 4, where a machine tool is placed in a workspace, and an operator is located in front of the machine tool when operating a machine tool, and an emergency region of the machine tool is located in front of the upper body of the operator.

The processor 120 may set five regions of interest corresponding to the machine tool placed in the workspace, as illustrated in FIG. 4. The processor 120 may determine which objects enter, leave, or are located in each region by tracking whether point cloud data is created, disappeared, or exists in the corresponding region.

Referring to FIG. 4, the region of interest may be divided into five regions and set. The region of interest may be set to include an emergency region of the machine tool and an observation region where the body of the operator may be located when operating the machine tool. The observation region may be divided into sub-observation regions for each part of the body of the operator. The observation region may be appropriately adjusted to suit the actual physical conditions of the operator.

In FIG. 4, a first region of interest 1, a second region of interest 2, a third region of interest 3, and a fourth region of interest 4 are sub-observation regions, and a fifth region of interest 5 is a sub-observation region and also corresponds to an emergency region of the machine tool.

The processor 120 may determine whether there is point cloud data corresponding to the operator in the emergency region of the machine tool and the sub-observation regions distinguished by body parts of the operator, and determine the posture of the operator based on a combination of regions including point cloud data corresponding to the operator among the emergency region and the sub-observation regions.

The first region of interest 1 is a sub-observation region corresponding to a space where the entire body of a person can be detected. If there is point cloud data in the first region of interest 1, the sensing device 100 may determine that the operator is located where the operator is when operating the machine tool. If there was point cloud data does in the first region of interest 1 and then point cloud data is created, the sensing device 100 may determine that the operator has entered the first region of interest 1. On the contrary, if point cloud data exists in the first region of interest 1 and then disappears, the sensing device 100 may determine that the operator has left the first region of interest 1.

The second region of interest 2 is a sub-observation region corresponding to a space where a head of a person can be detected. If point cloud data exists in the second region of interest 2, the sensing device 100 may determine that the head of the operator is located. In the sensing device 100, if point cloud data corresponding to the operator exists in some space of the first region of interest 1, but no point cloud exists in the second region of interest 2, the sensing device 100 may determine that the operator lowered his head or bent his back.

The third region of interest 3 is a sub-observation region corresponding to a space where a human torso can be detected. If point cloud data exists in the third region of interest 3, the sensing device 100 may determine that the operator's torso is located. If point cloud data corresponding to the operator exists in some space of the first region of interest 1, but no point cloud exists in the second region of interest 2 and the third region of interest 3, the sensing device 100 may determine that the operator has dropped down or is lying on the floor.

The fourth region of interest 4 is a sub-observation region corresponding to a space where the legs of a person legs can be detected. If point cloud data exists in the fourth region of interest 4, the sensing device 100 may determine that the legs of the operator are located. If point cloud data corresponding to the operator exists in some space of the first region of interest 1, but no point cloud exists in the fourth region of interest 4, it may be determined that the operator is floating or hanging in the air.

The fifth region of interest 5 is a sub-observation region corresponding to a space where a hand or body part of a person can be detected, and an emergency region corresponding to a space where an emergency situation may occur for an operator operating a machine tool. If point cloud data corresponding to the operator exists in the fifth region of interest 5, the sensing device 100 may determine that a hand or a body part of an operator is located in the emergency region of the machine tool. If there is point cloud data corresponding to the operator in some space of the first region of interest 1, but there is no point cloud corresponding to the operator in the fifth region of interest 5, the sensing device 100 may determine that the hand or body part of the operator is not in the emergency region of the machine tool.

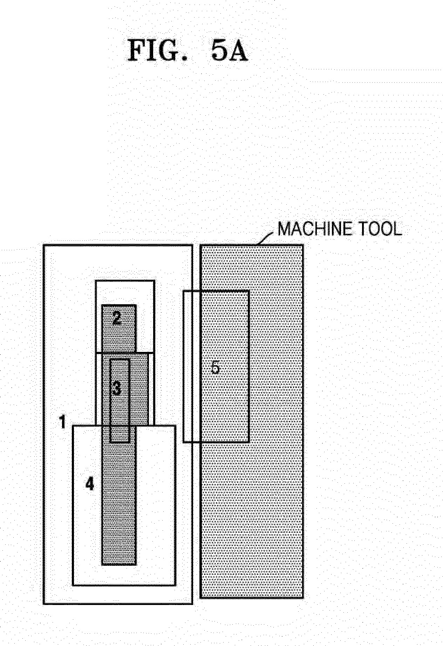

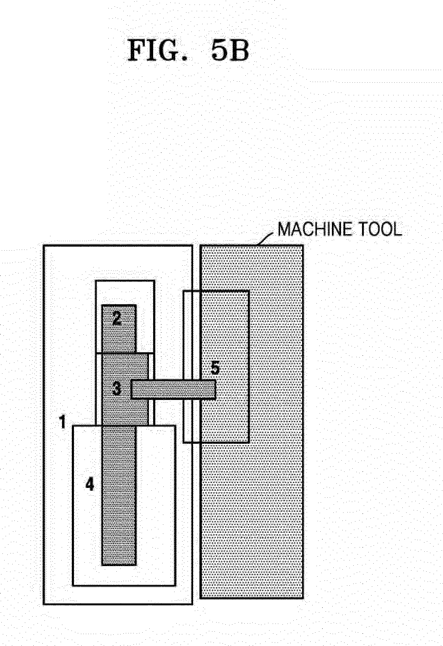

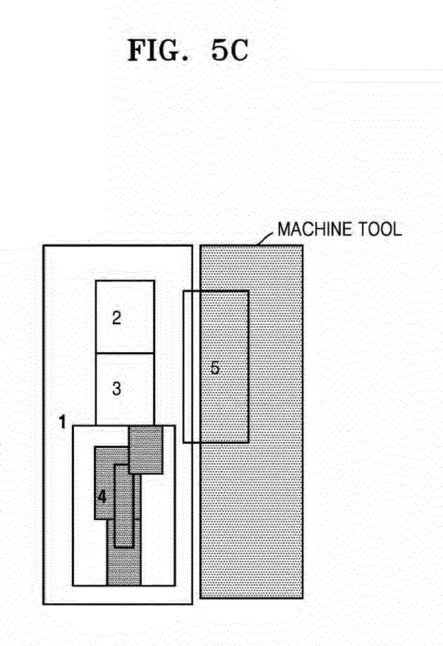

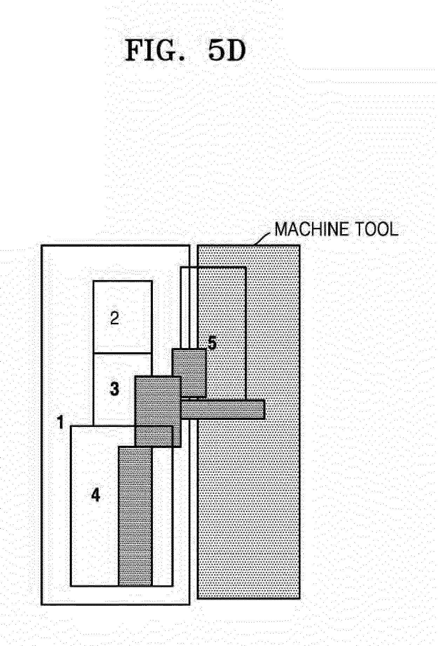

FIGS. 5A, 5B, 5C, and 5D are diagrams for describing examples of determining a posture of an operator based on a combination of regions where point cloud data corresponding to an operator exists among an emergency region and sub-observation regions.

Referring to FIG. 5A, there are pieces of point cloud data in the first region of interest 1, the second region of interest 2, the third region of interest 3, and the fourth region of interest 4, and there is no point cloud data in the fifth region of interest 5, and thus, the processor 120 may determine that the operator is standing in front of the emergency region of the machine tool.

Referring to FIG. 5B, there are pieces of point cloud data in all of the first region of interest 1, the second region of interest 2, the third region of interest 3, the fourth region of interest 4, and the fifth region of interest 5, and thus, the processor 120 may determine that the operator is standing in front of the emergency region of the machine tool and placing his or her hand at the emergency region.

Referring to FIG. 5C, there are point cloud data in the first region of interest 1 and the fourth region of interest 4, and there is no point cloud data in the second region of interest 2, the third region of interest 3, and the fifth region of interest 5, and thus, the processor 120 may determine that the operator has dropped down and is sitting or has collapsed in front of the emergency region of the machine tool.

Referring to FIGS. 5D, there are point cloud data in the first region of interest 1, the third region of interest 3, the fourth region of interest 4, and the fifth region of interest 5, and there is no point cloud data in the second region of interest 2, and thus, the processor 120 may determine that the operator has his or her head and hands in the emergency region of the machine tool.

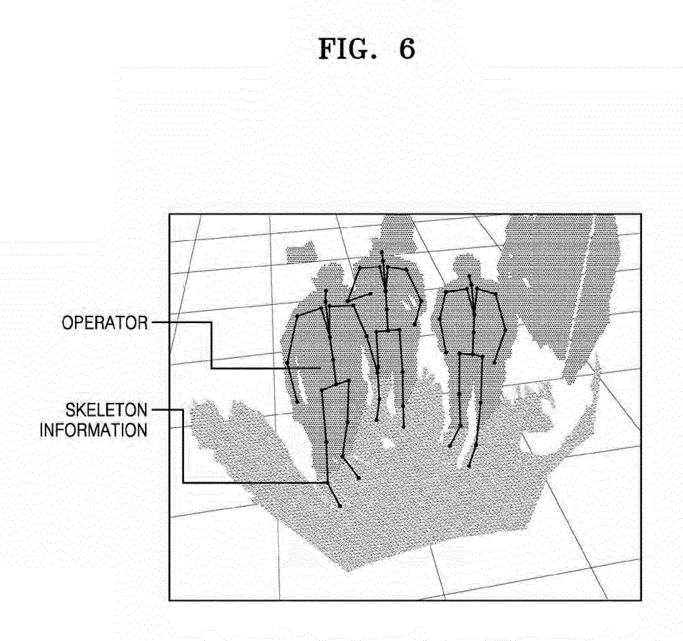

FIG. 6 is a diagram illustrating an example of a process of extracting skeleton information from point cloud data corresponding to an operator in order to track a posture of the operator.

Unlike the rule-based posture estimation algorithm of FIGS. 4 and 5 described above, FIG. 6 describes tracking the posture of the operator by using a machine learning-based posture estimation algorithm.

The processor 120 may obtain skeleton information from point cloud data corresponding to the operator by using a machine learning-based neural network model, and determine the posture of the operator based on the body part of the operator classified according to joint positions of the skeleton information and the emergency region of the machine tool.

Referring to FIG. 6, the processor 120 may obtain skeleton information from which the posture of the operator may be identified, by using body tracking based on point cloud data with respect to the region of interest including the emergency region of the machine tool and the observation region where the body of the operator is located when operating the machine tool. As illustrated in FIG. 6, the skeleton information provides joint coordinates corresponding to joint positions where the body parts of the operator are connected to each other, and thus, the processor 120 may confirm the body parts of the operator classified according to the joint positions. The processor 120 may track the posture of the operator based on the identified body parts of the operator and the emergency region of the machine tool.

Referring again to FIG. 2, the processor 120 may detect an emergency situation in the workspace based on the tracked posture of the operator. Referring back to the examples of FIGS. 5A to 5D described above, in the case of FIG. 5A, the operator is standing in front of the machine tool, but since point cloud data corresponding to the operator is not found in the emergency region, the processor 120 may determine that an emergency situation has not occurred. In the case of FIG. 5B, since point cloud data corresponding to the hand of the operator is found in the emergency region, the processor 120 may determine that it is a potential emergency situation, and continue monitoring, and notify the server 200 of the potential emergency situation. In the case of FIG. 5C, since no point cloud data corresponding to the operator is found in the emergency region, the processor 120 may determine that an emergency situation caused by the machine tool has not occurred, but since the posture of the operator is not a typical posture expected from an operator operating the machine tool, the processor 120 may determine that it is a situation similar to an emergency situation and notify the server 200 of the situation. In the case of FIG. 5D, since the operator's head and hands are in the emergency region of the machine tool, the processor 120 may determine that it is an emergency situation and notify the server 200 that the emergency situation has been detected.

Furthermore, in order to manage emergency situations more systematically, the processor 120 may determine the level of the emergency situation according to the degree to which the volume of the operator corresponding to the tracked posture of the operator and the volume of the machine tool overlap with each other, and determine whether it is an emergency region, according to the determined level of the emergency situation.

Accordingly, through the communication interface 140, the processor 120 may notify the server 200 that a potential emergency situation is detected if the determined level of emergency situation is greater than or equal to a first reference value, and the processor 120 may notify the server 200 that an emergency situation has occurred if the determined level of emergency situation is greater than or equal to a second reference value greater than the first reference value.

The processor 120 may predict a movement of the operator according to the change in the tracked posture of the operator and predict an emergency situation in the workspace according to the predicted movement.

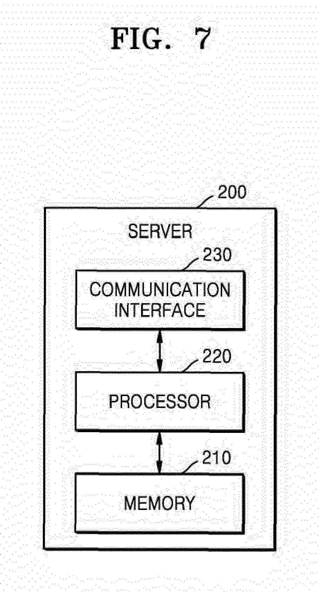

FIG. 7 is a diagram for describing a configuration and an operation of the server 200 according to an embodiment. The server 200 may be replaced by a computing device, an operator, a console device, etc.

As described above, the sensing device 100 may include a processor capable of obtaining point cloud data with respect to a workspace by using a 3D sensor that detects three-dimensional space, detecting and tracking objects in a region of interest in the workspace, and monitoring the workspace, but is not limited thereto. When the sensing device 100 transmits the point cloud data with respect to the workspace obtained by the sensing device 100, to the server 200, the server 200 may detect static objects or dynamic objects in the workspace and perform a series of processing of tracking the detected objects. The server 200 may be implemented with technology such as cloud computing. The server 200 may perform high-speed data communication with the sensing device 100.

Referring to FIG. 7, the server 200 may include a memory 210, a processor 220, and a communication interface 230. It will be obvious to those skilled in the art pertaining to the present embodiment that other general-purpose components may be included in addition to the components illustrated in FIG. 7. Previously, the description of the sensing device 100, which may be omitted herein, may be directly applied to the configuration of the server 200 with respect to the components with the same name.

Each component in the block diagram of FIG. 7 may be separated, added, or omitted depending on the implementation method of the server 200. That is, depending on the implementation method, one component may be subdivided into two or more components, two or more components may be combined into one component, or some components may be added or removed.

The memory 210 may store instructions executable by the processor 220. The memory 210 may store software or programs.

The processor 220 may execute instructions stored in the memory 210. The processor 220 may perform overall control of the server 200. The processor 220 may obtain information and requests received through the communication interface 230 and store the received information in a storage (not shown). Additionally, the processor 220 may process received information. For example, the processor 220 may obtain information used to provide an emergency situation management service from data or information received from the sensing device 100, or perform processing to manage the received data or information, and store the processed data or information in the storage (not shown). Additionally, in response to a request obtained from the manager terminal 300, the processor 220 may transmit information corresponding to the request, to the manager terminal 300 through the communication interface 230 by using data or information stored in the storage (not shown). For example, the processor 220 may store emergency situation occurrence status or statistical data in the storage, generate a report related to an emergency situation, and transmit the report to an external device such as the manager terminal 300 through the communication interface 230.

The communication interface 230 may perform wired or wireless communication with other devices or networks. The communication interface 230 may be connected to a device located outside the server 200 and may transmit and receive signals or data. The server 200 may communicate with the sensing device 100 or may be connected to another server connected to a network, through the communication interface 230.

The storage (not shown) may store various software and information that the server 200 needs to control devices or provide certain services. For example, the storage (not shown) may store various data or information used in programs, applications, and certain services running on the server 200.

The server 200 may be composed of a load balancing server and function servers that provide certain services. The server 200 may be composed of a plurality of servers divided by function, or may be an integrated server.

According to the above configuration, the server 200 may obtain point cloud data with respect to the workspace, from the sensing device 100 through the communication interface 230, or receive a result of the sensing device 100 detecting an emergency situation. The server 200 may receive, from the sensing device 100, information about the type of emergency situation, location information of the workspace where the emergency situation occurred, and camera images of the current situation in the workspace.

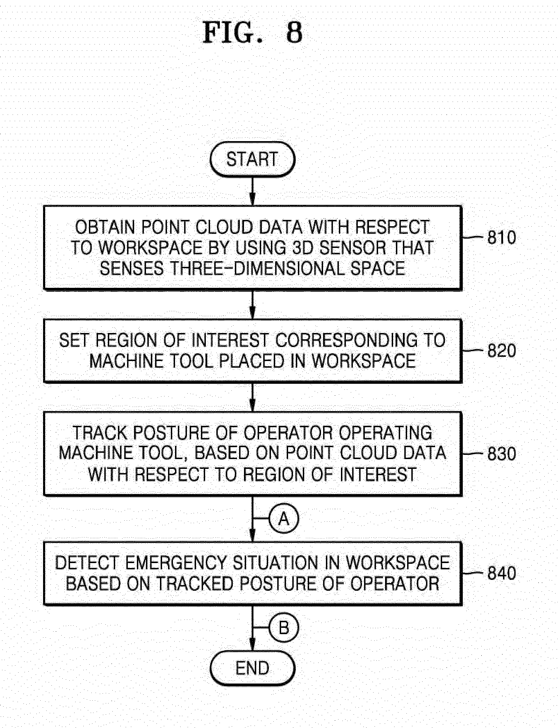

FIG. 8 is a flowchart of a method of monitoring a region of interest in a workspace, according to an embodiment. Description of the details that overlap with those described in regard to the sensing device 100 above will be omitted below.

In operation 810, the sensing device 100 may obtain point cloud data with respect to the workspace by using a 3D sensor that senses a three-dimensional space. For example, the sensing device 100 may continuously obtain point cloud data with respect to a three-dimensional space using a LiDAR sensor.

In operation 820, the sensing device 100 may set a region of interest corresponding to a machine tool placed in the workspace. The region of interest may include an emergency region of the machine tool and an observation region where the body of the operator is located when operating the machine tool. The sensing device 100 may set, in a spatial information map generated based on the point cloud data with respect to the workspace, as regions of interest, an emergency region preset depending on the type of machine tool and an observation region determined based on physical information based on a user profile of an operator.

In operation 830, the sensing device 100 may track the posture of the operator operating the machine tool, based on the point cloud data with respect to the region of interest.

For example, the sensing device 100 may determine whether there is point cloud data corresponding to the operator in the emergency region of the machine tool and the sub-observation regions distinguished by body parts of the operator, and determine the posture of the operator based on a combination of regions including point cloud data corresponding to the operator among the emergency region and the sub-observation regions.

As another example, the sensing device 100 may obtain skeleton information from point cloud data corresponding to the operator by using a machine learning-based neural network model, and determine the posture of the operator based on the body part of the operator classified according to joint positions of the skeleton information and the emergency region of the machine tool.

In operation 840, the sensing device 100 may detect an emergency situation in the workspace based on the tracked posture of the operator. The sensing device 100 may detect an emergency situation in the workspace according to whether the tracked posture of the operator invades the emergency region of the machine tool and which part of the body of the operator is located in the emergency region.

Furthermore, the sensing device 100 may determine the level of the emergency situation based on more detailed criteria and determine whether the situation is an emergency situation, according to the determined level of the emergency situation.

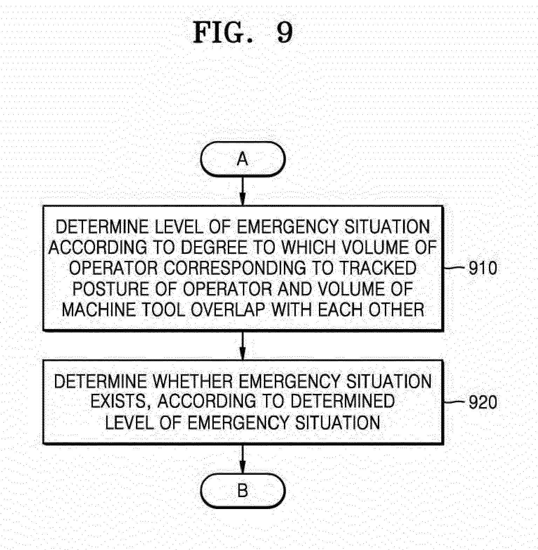

FIG. 9 is a detailed flowchart of an example of a process of detecting an emergency situation in a workspace.

In operation 910, the sensing device 100 may determine the level of an emergency situation according to the degree to which the volume of the operator corresponding to the tracked posture of the operator and the volume of the machine tool overlap with each other. The sensing device 100 may determine the level of the emergency situation by comparing the value of the volume of the operator's volume that overlaps the emergency region of the machine tool with a detailed standard.

In operation 920, the sensing device 100 may determine whether an emergency situation exists, according to the determined level of the emergency situation. According to the determined level of emergency situation, the sensing device 100 may determine that the situation is not an emergency situation, or may determine that the situation is a potential emergency situation or an emergency situation.

The sensing device 100 may notify the detected emergency situation to the server 200 that provides an emergency situation management service. For example, if the determined level of emergency situation is greater than or equal to the first reference value, the sensing device 100 may notify the server 200 that a potential emergency situation is detected, and if the determined level of emergency situation is greater than the second reference value greater than the first reference value, the sensing device 100 may notify the server 200 that an emergency situation has occurred.

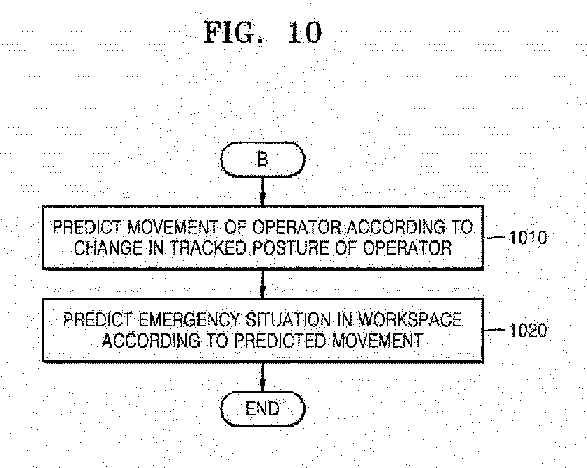

FIG. 10 is a detailed flowchart of an example of a process of predicting an emergency situation in a workspace.

In operation 1010, the sensing device 100 may predict a movement of the operator according to the change in the tracked posture of the operator. The sensing device 100 may continuously monitor the workspace and check changes in the posture of the operator. For example, if the operator shows a pattern of repeatedly dropping down while working in a fixed position or if the body of the operator shows a tendency to gradually tilt toward the emergency region of the machine tool, the sensing device 100 may predict a movement of the operator according to the pattern or tendency.

In operation 1020, the sensing device 100 may predict an emergency situation in the workspace according to the predicted movement. The sensing device 100 may predict, by using a pattern or tendency determined according to a change in the posture of the operator, when an emergency situation will occur or what kind of emergency situation will occur to the operator.

Each of the embodiments described above may be provided in the form of a computer program or application stored on a medium for executing predetermined steps of performing a method for monitoring a region of interest in a workspace. In other words, each of the embodiments described above may be provided in the form of a computer program or an application, which is stored in a medium and causes at least one processor of the sensing device 100 to perform predetermined operations for performing a method of monitoring a region of interest in a workspace.

The above-described embodiments may be implemented in the form of a computer-readable storage medium that stores instructions and data executable by a computer or processor. At least one of the instructions and data may be stored in the form of program code, and when executed by a processor, may generate a predetermined program module and perform a predetermined operation. The computer-readable storage media may be read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disk, solid-state disk (SSD), and any device capable of storing instructions or software, associated data, data files, and data structures, and providing instructions or software, associated data, data files, and data structures to a processor or computer so that the processor or computer can execute the instructions.

While the embodiments have been particularly shown and described, it will be understood by those of ordinary skill in the art that various changes in form and details may be made therein without departing from the spirit and scope of the present disclosure as defined by the following claims. The embodiments should be considered in a descriptive sense only and not for purposes of limitation. The scope of the present disclosure is defined not by the detailed description of the present disclosure but by the appended claims, and all differences within the scope will be construed as being included in the present disclosure.

## Claims

1. A method for monitoring a region of interest in a workspace, the method comprising:
obtaining point cloud data with respect to the workspace by using a 3D sensor that detects a three-dimensional space;
setting a region of interest corresponding to a machine tool placed in the workspace;
tracking a posture of an operator operating the machine tool based on the point cloud data with respect to the region of interest; and
detecting an emergency situation in the workspace, based on the tracked posture of the operator.

2. The method of claim 1, wherein the region of interest comprises an emergency region of the machine tool and an observation region where the body of the operator is located when operating the machine tool.

3. The method of claim 2, wherein the setting of the region of interest comprises setting, in a spatial information map generated based on the point cloud data with respect to the workspace, the emergency region that is preset according to a type of the machine tool and the observation region determined according to body information based on a user profile of the operator.

4. The method of claim 2, wherein the tracking of the posture of the operator comprises:
determining whether point cloud data corresponding to the operator exists in the emergency region and sub-observation regions distinguished by body parts of the operator; and
determining the posture of the operator based on a combination of regions in which the point cloud data corresponding to the operator exists among the emergency region and the sub-observation regions.

5. The method of claim 2, wherein the tracking of the posture of the operator comprises:
obtaining skeleton information from point cloud data corresponding to the operator by using a machine learning-based neural network model; and
determining the posture of the operator based on body parts of the operator classified according to joint positions of the skeleton information and the emergency region.

6. The method of claim 1, wherein the detecting of an emergency situation in the workspace comprises:
determining a level of the emergency situation according to a degree to which a volume of the operator corresponding to the tracked posture of the operator and a volume of the machine tool overlap with each other; and
determining whether the emergency situation occurred, according to the determined emergency situation level.

7. The method of claim 6, further comprising notifying a server providing an emergency situation management service about the detected emergency situation to,
wherein the notifying of the server comprises notifying the server that a potential emergency situation is detected if the determined level of emergency situation is greater than or equal to a first reference value, and notifying the server that an emergency situation has occurred if the determined level of emergency situation is greater than a second reference value greater than the first reference value.

8. The method of claim 1, further comprising:
predicting a movement of the operator according to a change in the tracked posture of the operator; and
predicting an emergency situation in the workspace according to the predicted movement.

9. A computer-readable storage medium storing a program to be executed on a computer, comprising:
instructions for obtaining point cloud data with respect to a workspace by using a 3D sensor that detects a three-dimensional space;
instructions for setting a region of interest corresponding to a machine tool placed in the workspace;
instructions for tracking a posture of an operator operating the machine tool, based on point cloud data with respect to the region of interest; and
instructions for detecting an emergency situation in the workspace, based on the tracked posture of the operator.

10. A sensing device for monitoring a region of interest in a workspace, the sensing device comprising:
a sensor unit configured to obtain point cloud data with respect to the workspace by using a 3D sensor that detects a three-dimensional space;
a memory storing one or more instructions; and
a processor configured to, by executing the one or more instructions, set a region of interest corresponding to a machine tool placed in the workspace, track a posture of an operator operating the machine tool, based on point cloud data with respect to the region of interest, and detect an emergency situation in the workspace based on the tracked posture of the operator.

11. The sensing device of claim 10, wherein the region of interest comprises an emergency region of the machine tool and an observation region where the body of the operator is located when operating the machine tool.

12. The sensing device of claim 11, wherein the processor is further configured to, by executing the one or more instructions, set, in a spatial information map generated based on point cloud data with respect to the workspace, the emergency region that is preset according to a type of the machine tool and the observation region determined according to body information based on a user profile of the operator.

13. The sensing device of claim 11, wherein the processor is further configured to, by executing the one or more instructions, determine whether point cloud data corresponding to the operator exists in the emergency region and sub-observation regions distinguished by body parts of the operator, and determine the posture of the operator based on a combination of regions in which the point cloud data corresponding to the operator exists among the emergency region and the sub-observation regions.

14. The sensing device of claim 11, wherein the processor is further configured to, by executing the one or more instructions, obtain, by using a machine learning-based neural network model, skeleton information from point cloud data corresponding to the operator, and determine a posture of the operator based on the body parts of the operator classified according to joint positions of the skeleton information and the emergency region.

15. The sensing device of claim 10, wherein the processor is further configured to, by executing the one or more instructions, determine a level of the emergency situation according to a degree to which a volume of the operator corresponding to the tracked posture of the operator and a volume of the machine tool overlap with each other, and determine whether the emergency situation occurred, according to the determined level of the emergency situation.

16. The sensing device of claim 15, further comprising a communication interface configured to notify a server providing an emergency situation management service about the detected emergency situation,
wherein the processor is further configured to, by executing the one or more instructions, notify the server, through the communication interface, that a potential emergency situation is detected if the determined level of emergency situation is greater than a first reference value, and notify the server that an emergency situation has occurred if the determined level of emergency situation is greater than a second reference value greater than the first reference value.

17. The sensing device of claim 10, wherein the processor is further configured to, by executing the one or more instructions, predict a movement of the operator according to the change in the tracked posture of the operator and predict an emergency situation in the workspace according to the predicted movement.
